# EUROPÄISCHE PATENTSCHRIFT

(11) **EP 3 635 356 B1**
(45) Veröffentlichungstag und Bekanntmachung des Hinweises auf die Patenterteilung: **29.10.2025**
(21) Anmeldenummer: 18769024.3
(22) Anmeldetag: 06.06.2018
(51) Int. Cl.: G01L 3/10, G01L 5/1627, G01L 1/26

(54) **DOPPELFLANSCH-VERFORMUNGSKÖRPER FÜR DREHMOMENTAUFNEHMER**
DOUBLE-FLANGE DEFORMATION BODY FOR A TORQUE SENSOR
CORPS DE DÉFORMATION À DOUBLE BRIDE CONÇU POUR UN CAPTEUR DE COUPLE

(30) Priorität: 08.06.2017 DE 102017005460
(43) Veröffentlichungstag der Anmeldung: 15.04.2020
(73) Patentinhaber: Hottinger Brüel & Kjaer GmbH, 64293 Darmstadt (DE)
(72) Erfinder: HEEG, Jochen, 63517 Rodenbach (DE); MALOBABIC, Kerstin, 64289 Darmstadt (DE); SCHOTTE, Sven-Patrick, 63225 Langen (DE)
(74) Vertreter: Müller, Thomas
(86) Internationale Anmeldenummer: PCT/DE2018/000172
(87) Internationale Veröffentlichungsnummer: WO 2018/224067

(56) Entgegenhaltungen:
- WO-A1-00/26625
- WO-A1-2010/108674
- DE-A1- 102012 024 264
- LIANG QIAOKANG ET AL: "Design and Analysis of a Sensor System for Cutting Force Measurement in Machining Processes", SENSORS, vol. 16, no. 1, 7 January 2016 (2016-01-07), pages 70, XP055930939, Retrieved from the Internet <URL:https://www.ncbi.nlm.nih.gov/pmc/articles/PMC4732103/pdf/sensors-16-00070.pdf> [retrieved on 20220614], DOI: 10.3390/s16010070

## Beschreibung

Die Erfindung betrifft einen Doppelflansch-Verformungskörper als Grundkörper für die Herstellung eines Drehmomentaufnehmers, der auch geeignet ist, um axial wirkende Kräfte zu messen.

Ein wichtiges Ziel bei solchen Mehrkomponentenaufnehmern ist deren messtechnische Entkopplung, d.h. die elastischen Deformationen, die durch das aufgebrachte Drehmoment entstehen, sollen möglichst keine Rückwirkungen auf die Axialkraftmessung haben und umgekehrt.

Das Dokument DD 129236 A1 beschreibt eine Vorrichtung zum gleichzeitigen störkraftfreien Messen von Drehmoment und Axialkraft. Die Vorrichtung ist eine Messeinrichtung und eine Werkzeugaufnahme zugleich, insbesondere zum Bohren. Sie ist geeignet, das Messen des Drehmoments und der Axialkraft in zweikomponenten- oder einkomponentenweise während der Bearbeitung durchzuführen.

Diese Vorrichtung ist jedoch nicht geeignet, um Antriebswellen und anzutreibende Wellen mit unterschiedlichem Durchmesser miteinander zu verbinden. Für solche Zwecke werden allgemein bekannte und universell verwendbare Doppelflansch-Drehmomentaufnehmer eingesetzt. Somit besteht der Bedarf an einem Doppelflansch-Drehmomentaufnehmer, der Drehmomentmessung und gleichzeitig Axialkraftmessung ermöglicht.

Ein Verformungskörper zur Messung des Drehmoments und der Axialkraft ist bekannt aus dem Dokument:
LIANG QIAOKANG ET AL: "Design and Analysis of a Sensor System for Cutting Force Measuerement in Machining Processes"
SENSORS, (Online)
Bd. 16, Nr. 1, 7. Januar 20216 (2016-01-07), Seite 70
XP055930939,
DOI:10.3390/s16010070

Diese Vorrichtung ist jedoch nicht geeignet, um Antriebswellen und anzutreibende Wellen mit unterschiedlichem Durchmesser miteinander zu verbinden.

Weiterhin sind in den Dokumenten DE 10 2012 024264 A1 und WO 2010/108674 A1 Drehmomentsensoren beschrieben, die zwischen zwei Wellen angeordnet werden können und eine kurze Bauweise aufweisen. Diese Drehmomentsensoren sind nicht für die Messung von axialen Kräften geeignet.

Flanschdrehmomentaufnehmer werden häufig in Motorprüfständen eingesetzt. Wenn z. B. an einem Bootsmotor Leistungsmessungen durchzuführen sind, sollen das Drehmoment und gleichzeitig auch die von der Schiffsschraube erzeugte Druckkraft gemessen werden. Die Messungen sollen unter praxisnahen Bedingungen erfolgen. Die Flansche der Flanschdrehmomentaufnehmer haben jedoch auf Grund ihrer Geometrie ein physikalisch vorbestimmtes relativ großes Massenträgheitsmoment, wodurch die zu messende Motorleistung verfälscht wird. Es wäre daher wünschenswert, einen Verformungskörper für einen Flanschdrehmomentaufnehmer mit einem geringen Durchmesser und geringem Gewicht bereitzustellen.

Diese Aufgabe wird mit einem Doppelflansch-Verformungskörper nach Patentanspruch 1 gelöst.

Der Vorteil dieses Doppelflansch-Verformungskörpers besteht in der guten Entkopplung zwischen den beiden Messgrößen, d.h. Deformationen, die durch ein Drehmoment erzeugt werden, beeinflussen nicht die Messung der Axialkraft und umgekehrt. Wegen der Stege-Anordnung hat der Verformungskörper eine geringere Masse und somit ein kleineres Massenträgheitsmoment als ein Verformungskörper mit Flanschen aus Vollmaterial.

Nach Anspruch 2 ist anstelle des scheibenförmigen Befestigungsflansches ein zum Befestigungsflansch identisch aufgebauter Befestigungsflansch mit einem Stützring und Stützstreben vorgesehen. Mit diesem Verformungskörper kann die Axialkraft noch genauer gemessen werden, da eine Mittelwertbildung vorgenommen werden kann. Weiterhin ist das Massenträgheitsmoment noch geringer als beim Verformungskörper gemäß Anspruch 1.

Nach Anspruch 3 sind die Stützstreben versetzt zueinander angeordnet. Dadurch wird eine höhere Eigenfrequenz bei Rotationsschwingungen erreicht, was besonders bei Motorenprüfständen von Vorteil ist.

Der Doppelflansch-Verformungskörper wird anhand von schematischen Zeichnungen näher erläutert.
- Fig. 1: zeigt eine erste Ausführungsform des Doppelflansch-Verformungskörpers.
- Fig. 2: zeigt eine zweite Ausführungsform des Doppelflansch-Verformungskörpers.

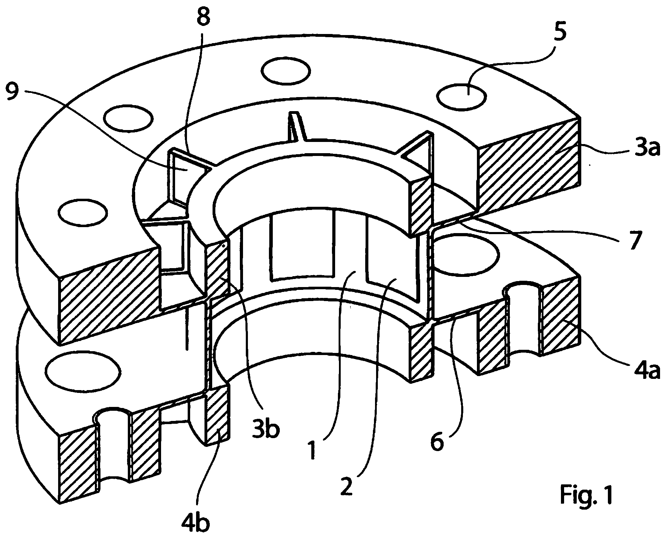

Die Fig. 1 zeigt einen einstückig gefertigten Doppelflansch-Verformungskörper, der als Grundkörper zur Herstellung des gewünschten Drehmomentaufnehmers dient und Querkraftmessung bei gleichzeitiger Axialkraftmessung ermöglicht.

Der Verformungskörper weist auf:
Einen konzentrisch um seine Drehachse verlaufenden rohrförmigen Drehmomentmessabschnitt 1, wobei unter der Drehachse die gemeinsame Achse der beiden Wellen verstanden wird, zwischen denen das Drehmoment gemessen werden soll. Auf der Innenseite des Drehmomentmessabschnitts 1 sind Scherkraft-Dehnungsmessstreifen 2 befestigt. Der Drehmomentmessabschnitt 1 ist an einem Ende mit einem Stützring 3b und am anderen Ende mit einem Stützring 4b verbunden, wobei beide Stützringe einen quadratischen Querschnitt aufweisen. Von diesen Verbindungsstellen aus erstreckt sich eine scheibenförmige Membran 6, 7 radial nach außen zum entsprechenden ringförmigen Befestigungsflansch 3a, 4a, wobei jeder der beiden Befestigungsflansche 3a, 4a Befestigungsbohrungen 5 aufweist. Zwischen dem Außenumfang jedes der zwei Stützringe 3b, 4b und dem Innenumfang jedes der zwei ringförmigen Befestigungsflansche 3a, 4a erstrecken sich 8 plattenförmige und elastisch verformbare Stützstreben 8, auf denen Scherkraft-Dehnungsmessstreifen 9 zur Axialkraftmessung angeordnet sind. Die scheibenförmige Membran bewirkt eine hohe Versteifung, so dass auch relativ hohe Drehmomente übertragen werden können.

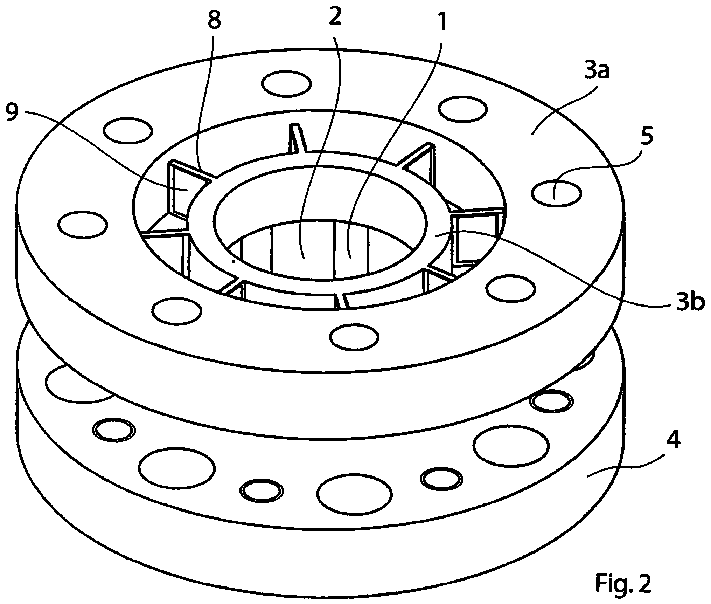

Der Verformungskörper nach Fig. 2 unterscheidet sich von dem Verformungskörper nach Fig. 1 darin, dass der Flansch mit den Merkmalen 4a, 4b und 6 durch eine Scheibe 4 aus Vollmaterial ersetzt ist.

## Patentansprüche

1. Doppelflansch-Verformungskörper, der einstückig gefertigt ist und aufweist:
- einen konzentrisch um seine Drehachse angeordneten rohrförmigen und elastisch verformbaren Drehmomentmessabschnitt (1), auf dessen Innenseite Scherkraft-Dehnungsmessstreifen (2) befestigt sind,
- einen konzentrisch angeordneten ringförmigen Befestigungsflansch (3a) und einen beabstandet und parallel zu diesem konzentrisch angeordneten scheibenförmigen Befestigungsflansch (4), der mit einem Ende des rohrförmigen Drehmomentmessabschnitts (1) verbunden ist und beide Befestigungsflansche (3a, 4) Befestigungsbohrungen (5) aufweisen,
- einen Stützring (3b) mit rechteckigem Querschnitt, der konzentrisch innerhalb des Befestigungsflansches (3a) angeordnet und mit dem anderen Ende des rohrförmigen Drehmomentmessabschnitts (1) verbunden ist,
- wenigstens 6 plattenförmige und elastisch verformbare Stützstreben (8), die sich radial zwischen dem Außenumfang des Stützrings (3b) und dem Innenumfang des ringförmigen Befestigungsflansches (3a) erstrecken, wobei auf den Stützstreben (8) Scherkraft-Dehnungsmessstreifen (9) zur Axialkraftmessung angeordnet sind und
- eine scheibenförmige Membran (7), die sich zwischen dem Außenumfang des Stützrings (3b) und dem Innenumfang des ringförmigen Befestigungsflansches (3a) erstreckt.

2. Doppelflansch-Verformungskörper nach Anspruch 1, wobei anstelle des scheibenförmigen Befestigungsflansches (4) ein zum Befestigungsflansch (3a) identischer aufgebauter Befestigungsflansch (4a) mit einem Stützring (4b) und Stützstreben (8) vorgesehen ist.

3. Doppelflansch-Verformungskörper nach Anspruch 2, wobei der Befestigungsflansch (3a) mit dem dazugehörenden Stützringring (3b) und der Befestigungsflansch (4a) mit dem dazu gehörenden Stützring (4b) die gleiche Anzahl an Stützstreben (8) aufweisen, die Stützstreben (8) aber versetzt zueinander angeordnet sind.

## Claims

1. Double-flange deformation body, manufactured in one piece and comprising:
- a tubular and elastically deformable torque measuring section (1) arranged concentrically around its axis of rotation, to the inside of which shear force strain gauges (2) are attached,
- a concentrically arranged annular mounting flange (3a) and a spaced-apart, disc-shaped mounting flange (4) arranged concentrically parallel thereto, which is connected to one end of the tubular torque measuring section (1), and both mounting flanges (3a, 4) comprising mounting boreholes (5),
- a support ring (3b) with a rectangular cross-section, which is arranged concentrically inside the mounting flange (3a) and is connected to the other end of the tubular torque measuring section (1),
- at least 6 plate-shaped and elastically deformable support struts (8) extending radially between the outer circumference of the support ring (3b) and the inner circumference of the annular mounting flange (3a), wherein shear force strain forces (9) for measuring axial forces are arranged on the support struts (8), and
- a disc-shaped diaphragm (7) extending between the outer circumference of the support ring (3b) and the inner circumference of the annular mounting flange (3a).

2. Double-flange deformation body according to claim 1, wherein instead of the disc-shaped mounting flange (4), a mounting flange (4a) identical in construction to the mounting flange (3a) is provided with a support ring (4b) and support struts (8).

3. Double-flange deformation body according to claim 2, wherein the mounting flange (3a) with the associated support ring (3b) and the mounting flange (4a) with the associated support ring (4b) have the same number of support struts (8), but the support struts (8) are arranged offset from one another.

## Revendications

1. Corps de déformation à double bride qui est fabriqué d'un seul tenant et présente :
- une section de mesure de couple (1) déformable élastiquement et tubulaire agencée de manière concentrique autour de son axe de rotation, au côté intérieur de laquelle sont fixés des jauges de contrainte de force de cisaillement (2),
- une bride de fixation (3a) annulaire agencée de manière concentrique et une bride de fixation (4) en forme de disque agencée de manière concentrique à distance et parallèlement à celle-ci qui est reliée à une extrémité de la section de mesure de couple (1) tubulaire et les deux brides de fixation (3a, 4) présentent des trous de fixation (5),
- un anneau d'appui (3b) avec une section transversale rectangulaire qui est agencé de manière concentrique à l'intérieur de la bride de fixation (3a) et est relié à l'autre extrémité de la section de mesure de couple (1) tubulaire,
- au moins 6 entretoises d'appui (8) en forme de plaque et déformables élastiquement qui s'étendent radialement entre la périphérie extérieure de l'anneau d'appui (3b) et la périphérie intérieure de la bride de fixation (3a) annulaire, dans lequel des jauges de contrainte de force de cisaillement (9) sont agencées sur les entretoises d'appui (8) pour la mesure de la force axiale et
- une membrane en forme de disque (7) qui s'étend entre la périphérie extérieure de l'anneau d'appui (3b) et la périphérie intérieure de la bride de fixation (3a) annulaire.

2. Corps de déformation à double bride selon la revendication 1, dans lequel à la place de la bride de fixation (4) en forme de disque, une bride de fixation (4a) constituée identique à la bride de fixation (3a) est prévue avec un anneau d'appui (4b) et des entretoises d'appui (8).

3. Corps de déformation à double bride selon la revendication 2, dans lequel la bride de fixation (3a) avec l'anneau d'appui (3b) afférent et la bride de fixation (4a) avec l'anneau d'appui (4b) afférent présentent le même nombre d'entretoises d'appui (8), mais les entretoises d'appui (8) sont agencées en déport les unes des autres.
